# EUROPEAN PATENT SPECIFICATION

(11) **EP 2 756 017 B1**
(45) Date of publication and mention of the grant of the patent: **21.10.2015**
(21) Application number: 12756493.8
(22) Date of filing: 11.09.2012
(51) Int. Cl.: C08F 257/00, C08F 265/04, C08F 291/00, C09J 133/00

(54) **METHOD FOR THE CONTINUOUS PRODUCTION OF WATER-DISPERSIBLE VINYL POLYMERS**
VERFAHREN ZUR DURCHGEHENDEN HERSTELLUNG VON WASSERDISPERGIERBAREN VINYLPOLYMEREN
PROCÉDÉ DE PRODUCTION CONTINUE DE POLYMÈRES VINYLIQUES DISPERSIBLES DANS L'EAU

(30) Priority: 15.09.2011 EP 11181400
(43) Date of publication of application: 23.07.2014
(73) Proprietor: Bayer Intellectual Property GmbH, 40789 Monheim am Rhein (DE)
(72) Inventor: AVTOMONOV, Evgeny, 201507 Shanghai (CN); HENNINGER, Björn, 22145 Hamburg (DE); RUHLAND, Matthias, 51375 Leverkusen (DE); WITKOWSKI, Reiner, 46242 Bottrop (DE); BACHMANN, Rolf, 51469 Bergisch Gladbach (DE)
(74) Representative: BIP Patents
(86) International application number: PCT/EP2012/067731
(87) International publication number: WO 2013/037770

(56) References cited:
- WO-A1-01/70825
- WO-A1-2004/099261

## Description

The present invention relates to a method for the continuous production of water-dispersible vinyl polymers, comprising the step of mixing at least a first and a second component and then passing the mixed components through a first delay section, the first component comprising at least one radically polymerizable, hydroxyl group-containing monomer and the second component comprising at least one initiator. The invention further concerns a water-dispersible vinyl polymer, obtainable by a method according to the invention, the use of the polymers according to the invention for the manufacturing of coatings, adhesives or sealants and an article coated with a cross-linked polymer according to the invention.

It is known from a wide number of publications and patents to use dispersions based on (co)polymerisates of vinylic, radically (co)polymerizable comonomers as binders in water-dilutable coatings. Such dispersions are prepared in the art from copolymers or mixtures of copolymers, for example (meth)acrylic esters, and further addition of hydroxyfunctional monomers, acid-functional monomers and optionally other monomers and molecular weight regulators.

The preparation of such copolymers or copolymer mixtures in the art is undertaken by free radical polymerization in a batch process. Optionally, the batch reactor may already be charged with polymers and/or further reactions may take place in the finished reaction mixture. The reaction may be conducted in substance (in bulk), meaning in the absence of diluting and radically non-reactive substances, in the presence of solvents or as an emulsion polymerization, meaning directly in water. Copolymers or copolymer mixtures thus obtained (generally referred to as 'resin') typically have an acid group content in mmol per 100 g solid polymer of 0.1 to 200 mmol.

For the production and the use of such (meth)acrylate polymers in two-component polyurethane coatings reference is made to EP-A 0 947 557, EP-A 1 510 561, DE-A 10 2004 054447, EP-A 1 657 270, EP-A 1 702 954, EP-A 1 862 485, EP-A 2 025 690, EP-A 0 358 979, EP-A 0 537 568, EP-A 0 543 228, EP-A 0 758 007, EP-A 0 841 352, EP-A 1 141 065, EP-A 1 024 184 and DE-A 4 439 669.

Furthermore, the resin typically has a number average molecular weight of 500 to 50000 g/mol and is in the form of a highly viscous melt or a solution. The viscosity is a function of temperature and shear rate and normally is in a range of 1 Pa s and 1000 Pa s at shear rates from 40/s to 100/s.

After the manufacture of the copolymers or copolymer mixtures in substance or in the presence of solvents it is necessary to prepare the desired aqueous dispersion in a separate process step. In the art it is described (e. g. EP-A 947 557, DE-A 4 439 669 or EP-A 1 0241 84) to add, in a stirred vessel (usually the reaction vessel), batch-wise one or more basic compounds such as, for example, organic amines, ammonia or solutions of inorganic bases. This is generally referred to as the neutralization step. Then water is added to the neutralized resin and mixed with it or sometimes the neutralized resin is added to water and mixed with the water. This is generally referred to as the emulsifying or dispersing step. A part of the resin may also transfer to the aqueous solution.

The polymer particles within the emulsion solidify during cooling. Particles should have a mean size of less than 300 nm, which may be determined by way of the weight average. Then water-dilutable coatings can be produced with good optical properties such as a high gloss and furthermore good storage stability. It is generally necessary to lower the residual monomer content in the resins to less than 1 weight-%, relative to the solid polymer, preferably less than 0.5 weight-% because the resulting polymer dispersions need to be substantially free from vinylic monomers.

In order to obtain polymers with number averaged molecular weights Mₙ from 500 to 50000 g/mol, preferably 1000 to 30000 g/mol and particularly preferred 2000 to 20000 g/mol it is frequently necessary to conduct the free radical polymerization at high temperatures of over 120 °C and at the same time in the presence of higher amounts of radical starters (initiators) and optionally of substantial amounts of molecular weight regulators such as organic thiols. These conditions lead to small batch reactors, longer reaction times and an increased need for temperature control. All of these factors negatively influence the efficiency of the process, in particular the space-time yield. Furthermore, a significant amount of inert thinners is needed in a batch-wise operating mode to control the process, especially during the initial reaction stages.

A free radical polymerization of vinylic monomers in a continuous mode is also known in the art and, from an economic point of view, constitutes an attractive process with respect to space-time yield and the energy needed for the temperature control. Such thermoplastically processible polymer resins like polystyrene, styrene-acrylonitrile copolymer and polymethyl methacrylate are generally prepared in a continuous process under free-radical polymerization conditions.

The production of water-dilutable (meth)acrylate polymers with number averaged molecular weights Mₙ from 500 to 50000 g/mol, preferably 1000 to 30000 g/mol and particularly preferred 2000 to 20000 g/mol, with a hydroxyl group content with respect to 100 g of the (meth)acrylate resin of 5 to 600 mmol, preferably 30 to 400 mmol and particularly preferred 50 to 350 mmol (M = 17 g/mol) in a continuous free radical polymerization process has still not been known in the art. One reason for this are the obstacles to overcome in such a free radical polymerization:
1) The polymerization rate is directly proportional to the square root of the initiator concentration and directly proportional to the monomer concentration: Vₚ ∼ k [initiator]^{1/2} [monomer].
2) The degree of polymerization and therefore the molecular weight, for instance the number average molecular weight, is directly proportional to the monomer concentration and inversely proportional to the square root of the initiator concentration: P ∼ [monomer] / [initiator]^{1/2}.

This leads to the conclusion that to control a free radical polymerization for the production of a low number average molecular weight polymer the ratio [monomer] / [initiator]^{1/2} should be low, and at the same time the product [initiator]^{1/2} [monomer] should also be low in order to control the heat generation during the polymerization. This is feasible in a batch-wise mode by a low rate of adding the initiator and the monomer while at the same time maintaining a high ratio of initiator to monomer.

These conditions, however, are contradictory in a continuous reaction mode and therefore difficult to realize at the same time. In order to solve the problem of insufficient heat removal at high conversion rates and a high monomer concentration, one would either have to use a large amount of diluting substances or to run an incomplete polymerization and remove the non-reacted monomers from the product.

It was thus an object of the present invention to provide a method for the continuous production of water-dispersible vinyl polymers overcoming the above mentioned problems.

This object has been solved
a continuous process wherein
the first delay section comprises at least one mixing element selected from the group consisting of static mixing elements and dynamic mixing elements; and
the first delay section has a heat transfer rate of ≥ 10 kW/(K m³) to ≤ 750 kW/(K m³).

As opposed to the conventional semi-batch or batch processed the continuous process according to the invention allows for a safe and product specification-conforming production with a considerably higher space-time yield and shorter hold-up of reactive monomers in the production equipment.

The first delay section with its mixing element ensures a high reaction turnover and its heat transfer rate of ≥ 10 kW/(K m³) to ≤ 750 kW/(K m³) allows for an effective heat removal at the same time. Continuous processes in the sense of the invention are those in which the in feed of the reactants into the reactor and the discharge of the products from a reactor take place simultaneously but at separate locations, whereas, in the case of discontinuous reaction, the reaction steps of feeding the reactants, carrying out chemical reaction and discharging the products take place in temporal succession.

According to a first preferred embodiment of the present invention the polymers can comprise at least one hydroxyl group-containing (meth)acrylate polymer or at least one hydroxyl group-containing (meth)acrylate copolymer with a number averaged molecular weight Mₙ between 500 and 50000 g/mol, wherein the process can be conducted as a free radical polymerization at a temperature between 80 and 240 °C with a content of 0 to 30 weight-% of substances inert towards a free radical polymerization and which leads to polymers with less than 1 weight-% of residual monomers with respect to the solid resin.

Preferably the hydroxyl group-containing monomers are selected from the group consisting of include 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl acrylate, N-methylol(meth)acrylamide, vinyl alcohol, allyl alcohol, 2-hydroxyethyl vinyl ether, 4-hydroxybutylvinyl ether, and diethylene glycol monovinyl ether. More preferably the hydroxyl group-containing monomer is selected from the group consisting of hydroxyethyl acrylate, hydroxypropyl acrylate, hydroxybutyl acrylate, hydroxyethyl methacrylate and hydroxypropyl methacrylate.

Further monomers which may be employed include aromatic vinyl monomers such as styrene, chlorostyrene, chloromethylstyrene, α-methylstyrene, and vinyl toluene;
aliphatic esters of acrylic and/or methacrylic acid with 1 to 18 C-atoms such as methyl (meth)acrylate, ethyl (meth)acrylate, n-butyl (meth)acrylate, s-butyl (meth)acrylate, t-butyl (meth)acrylate, isobutyl (meth)acrylate, hexyl (meth)acrylate, 2-ethylhexyl (meth)acrylate, n-octyl (meth)acrylate, isooctyl (meth)acrylate, n-nonyl (meth)acrylate, isononyl (meth)acrylate, n-decyl (meth)acrylate, isodecyl (meth)acrylate, n-dodecyl (meth)acrylate, n-tridecyl (meth)acrylate, and n-tetradecyl (meth)acrylate;
cycloaliphatic esters of acrylic and/or methacrylic acid with 1 to 12 C-atoms in the alcohol component such as cyclohexyl methacrylate, isobornyl acrylate and isobornyl methacrylate;
reaction products of hydroxyalkyl esters of acrylic and/or methacrylic acid with 2 to 4 C-atoms in the hydroxyalkyl rest with ε-caprolactone;
α,β-monoolefinically unsaturated mono- or dicarboxylic acids such as acrylic acid, methacrylic acid, itaconic acid, maleic acid, fumaric acid, crotonic acid and isocrotonic acid;
and/or at least one hemiester of maleic or fumaric acid with 1 to 14 C-atoms in the alcohol rest such as maleic acid monoethyl ester and maleic acid monobutyl ester;
further monomers such as methyl vinyl ether, ethyl vinyl ether, glycidyl (meth)acrylate, methylglycidyl (meth)acrylate, allyl glycidyl ether, cyclohexylmaleimide, isopropylmaleimide, N-cyclohexylmaleimide, itaconeimide, aminoethyl (meth)acrylate, N,N-dimethylaminoethyl (meth)acrylate, N,N-dimethylaminopropyl (meth)acrylate, (meth)acryloylmorpholine, acrylamide, methacrylamide, diethylacrylamide, N-vinylpyrrolidone, N,N-dimethylacrylamide, N,N-dimethylmethacrylamide, N,N-diethylacrylamide, N,N-diethylmethacrylamide, N,N'-methylenebisacrylamide, N,N-dimethylaminopropylacrylamide, N,N-dimethylaminopropylmethacrylamide, diacetoneacrylamide, maleic acid anhydride, itaconic acid anhydride, styrenesulfonic acid, allylsulfonic acid, 2-(meth)acrylamido-2-methylpropanesulfonic acid, (meth)acrylamidopropanesulfonic acid, sulfopropyl (meth)acrylate, (meth)acryloyloxynaphthalenesulfonic acid, sodium vinylsulfonate, acrylonitrile and methacrylonitrile.

The term '(meth)acrylate' or '(meth)acrylic' means the possibility of having both acrylate and methacrylate derivatives.

This exemplary listing is not to be understood as limiting. It is also possible to use further unsaturated monomers as comonomers, cooligomers and even polymers with unsaturated groups.

The components may comprise further compounds such as, for example, solvents, reactive diluents, auxiliaries and/or catalysts.

Additionally possible is the feeding of further components along the delay section. The further components may in turn, again, comprise one or more compounds having isocyanate-reactive groups and/or isocyanate groups.

The metering rates depend primarily on the desired delay times and/or conversions rates to be achieved. The higher the maximum reaction temperature, the shorter the residence time should be. In this context, the reactions carried out without catalysis generally have a significantly higher residence time than the reactions carried out with catalysis, for example intiation by compunds forming radicals upon decomposition. It should be noted, however, that the process of the invention can be carried out both with and without catalysis.

The delay time can be controlled, for example, through the volume flow rates and the volume of the reaction zone. The course of the reaction is advantageously monitored by means of different measuring devices. Particularly suitable for this purpose are devices for measuring the temperature, the viscosity, the thermal conductivity and/or the refractive index in flowing media and/or for measuring infrared spectra and/or near-infrared spectra.

A particular feature of the reaction sections for use in accordance with the invention is their high heat transfer performance, as characterized by the specific heat transfer rate in W/(K m³), in other words the heat transfer per Kelvin of temperature difference in relation to the heat transfer medium, relative to the free volume of the reactor. Preferred heat transfer rates are ≥ 50 kW/(K m³) to ≤ 500 kW/(K m³), more preferred ≥ 100 kW/(K m³) to ≤ 300 kW/(K m³).

Appropriate here, for example, is the use of microreaction technology (p-reaction technology) with deployment of microreactors. The designation "microreactor" used here is representative of microstructured reactors which preferably operate continuously and are known by the designation microreactor, minireactor, microheat exchanger, minimixer or micromixer. Examples are microreactors, micro-heat exchangers, T- and Y-mixers and also micromixers from a wide variety of companies (e.g. Ehrfeld Mikrotechnik BTS GmbH, Institut für Mikrotechnik Mainz GmbH, Siemens AG, CPC-Cellulare Process Chemistry Systems GmbH, and others), as are common knowledge to a person skilled in the art; a "microreactor" for the purposes of the present invention typically has characteristic/defining internal dimensions of up to 1 mm and may include static mixing internals.

Likewise suitable are intensive heat exchangers, e.g. CSE-XR models from Fluitec, provided that they are able to fulfill the abovementioned properties in terms of their heat transfer capacities. Likewise conceivable here are coupled systems of microreactors with other heat exchangers with a relatively high degree of structuring, such as those from Fluitec or Sulzer, for example. The key feature in the case of these coupled systems is the arrangement of the individual types of reactor in accordance with the respectively anticipated, necessary thermal performance of the individual apparatus, taking account of the viscosities and/or pressure losses that occur.

As well as the heat transfer properties of the reaction section, a narrow delay time distribution in the reactor system is likewise an advantage, hence allowing the delay volume necessary for the desired conversion to be minimized. This is customarily achieved for the use of static mixing elements or of microreactors, as described above. Typically, as well, intensive heat exchangers such as those, for example, of the CSE-XR type, as described in EP-A 2113732, adequately meet this requirement. The components are metered into the reactor generally in separate reactant streams. Where there are more than two reactant streams, they may also be supplied in a bundled form. The streams may also be divided and in that way supplied in different proportions at different locations to the reactor. In this way, concentration gradients are set purposively, and this may bring about completeness of the reaction.

The entry point of the streams may be varied in sequence and offset in time. For the purpose of preliminary reaction and/or completion of the reaction, it is also possible for two or more reactors to be combined. Towards the end of the reaction section it is possible, optionally, for further desired additives that are customary in coating technology to be supplied and mixed in. Preferably, however, the additives are added to a reaction component even before the actual reaction. Such additives are photoinitiators, inhibitors, light stabilizers such as UV absorbers and sterically hindered amines (HALS), and also antioxidants, fillers, and paint auxiliaries, e.g. anti-settling agents, deaerating agents and/or wetting agents, flow control agents, reactive diluents, plasticizers, catalysts, and also pigments, dyes and/or matting agents. The use of light stabilizers and the various types are described by way of example in A. Valet, Lichtschutzmittel für Lacke, Vincentz Verlag, Hanover, 1996.

Prior to combination/mixing, the streams may be conditioned by means of a heat exchanger. Subsequently they may be mixed with an intensive mixer and conveyed through the reactor, which optionally contains further mixing elements. It is conceivable to connect two or more reactors in series. Each of these reactors is provided advantageously with cooling and/or heating means, as for example a jacket through which a conditioned heat transfer fluid is passed.

With respect to static and/or dynamic mixing elements, the use of an intensive mixer (p-mixer) is preferred which produces very rapid mixing of the reaction solutions with one another, thus avoiding a possible radial concentration gradient. Advantageous in this context is the reduced shear of the reaction mixture in the case of the use of microreactors/micromixers, which, in the case of the shear-sensitive acrylates, results in a more reliable operating regime and, moreover, implies a heightened product quality.

Preferred embodiments and other aspects of the present invention are described below. They can be combined freely unless the context clearly indicates otherwise.

In one embodiment of the method according to the invention the first component further comprises at least one monomer selected from the group consisting of aromatic vinyl monomers and aliphatic esters of acrylic and/or methacrylic acid with 1 to 18 C-atoms. Particularly preferred is a combination of at least two monomers selected from methyl methacrylate, hydroxyethyl (meth)acrylate, isobornyl (meth)acrylate, cyclohexyl (meth)acrylate, styrene and butyl acrylate.

In another embodiment of the method according to the invention the method is carried out under a pressure of ≥ 0 to ≤ 30 bar and at a temperature of ≥ -20 °C to ≤ 200 °C. Preferred temperature ranges are ≥ 10 °C to ≤ 180 °C and more preferred ≥ 50 °C to ≤ 150 °C. Preferred pressure ranges are ≥ 0 bar to ≤ 15 bar, more preferred ≥ 1 to ≤ 10 bar.

In another embodiment of the method according to the invention there is a delay time in the first delay section of ≥ 20 seconds to ≤ 120 minutes. In case there is a second delay section as outlined below, the delay time in the second delay section may also be in the range of ≥ 20 seconds to ≤ 120 minutes. Preferred values for delay times in each instance are ≥ 90 seconds to ≤ 90 minutes, more preferred ≥ 5 minutes to ≤ 60 minutes.

In another embodiment of the method according to the invention the method further includes the step of adding at least a third and a fourth component after the first delay section, the third component comprising at least one radically polymerizable monomer and the fourth component comprising at least one initiator and wherein the resulting mixture is passed through a second delay section. The second delay section may also have a heat transfer rate of ≥ 10 kW/(K m³) to ≤ 750 kW/(K m³), preferably ≥ 50 kW/(K m³) to ≤ 500 kW/(K m³) and more preferred ≥ 100 kW/(K m³) to ≤ 300 kW/(K m³).

Preferably the third component comprises at least one monomer selected from the group consisting of aromatic vinyl monomers, aliphatic esters of acrylic and/or methacrylic acid with 1 to 18 C-atoms, hydroxyl group-containing monomers, and (meth)acrylic acid. More preferably the third component comprises at least one monomer selected from the group consisting of alkyl methacrylate, hydroxyalkyl methacrylate, alkyl acrylate and acrylic acid. Most particularly preferred is a combination of at least two monomers selected from methyl methacrylate, hydroxyethyl methacrylate, butyl acrylate, isobornyl (meth)acrylate and acrylic acid.

In this respect, it is also preferred that the first delay section and the second delay (residence / dwell) section have different temperatures. The use of two or more independently conditionable heating/cooling zones makes it possible, for example, to cool the flowing reaction mixture at the beginning of the reaction, in other words shortly after mixing, and to take off heat of reaction that is liberated, and to heat the mixture towards the end of the reaction, in other words shortly before discharge from the reactor, in order to maximize conversion. The temperature of the cooling and heating media can be between +25 and +250 °C, preferably below +200 °C as well as by heating and/or cooling, the temperature of the reaction mixture is also influenced by the heat of reaction. Where ethylenically unsaturated compounds are present it is appropriate not to exceed certain upper temperature limits, since otherwise the risk of unwanted depolymerization goes up. For unsaturated acrylates the maximum reaction temperature ought not to exceed levels of +250 °C. It is preferred not to exceed +200 °C.

The present invention also concerns a water-dispersible vinyl polymer, obtainable by a method according to the invention. With respect to the monomer units constituting the polymers and initiators used in its manufacture, reference is made to the description in connection with the method according to the invention.

If the monomer-containing component or components comprise methyl methacrylate, hydroxyethyl methacrylate, butyl acrylate and acrylic acid (especially if the initiators comprise di-tert.-butylperoxycyclohexane and/or tert.-butylperoxy(ethylhexyl) carbonate), then polymers may be obtained with a number averaged molecular weight Mₙ of ≥ 500 g/mol to ≤ 50000 g/mol, preferably ≥ 1000 g/mol to ≤ 30000 g/mol and particularly preferably ≥ 2000 g/mol to ≤ 20000 g/mol (molecular weight is determined at 23°C by technique of Size Excluding Chromatography using tetrahydrofurane as eluent and polystyrene as standard for calibration).

Likewise, the invention is further directed to the use of the polymers according to the invention for the manufacturing of coatings, adhesives or sealants. Examples for substrates include wood, board, metal, stone, concrete, glass, cloth, leather, paper and foam. Preferably, the metal substrate is selected from the group consisting of steel, cold rolled steel, hot rolled steel, stainless steel, aluminum, steel coated with zinc metal, steel coated with zinc alloys and mixtures thereof.

Through combination with cross-linkers it is possible, depending on the reactivity or, where appropriate, blocking of the cross-linkers, to prepare both one-component (1K) and two-component (2K) coating materials. 1K coating materials for the purposes of the present invention are coating materials in which binder component and cross-linker component can be stored together without any cross-linking reaction taking place to a marked extent or to an extent which is detrimental to the subsequent application. The cross-linking reaction takes place only on application, after the cross-linker has been activated. This activation can be effectuated, for example, by raising the temperature. 2K coating materials for the purposes of the present invention are coating materials in which binder component and cross-linker component have to be stored in separate vessels owing to their high reactivity. The two components are not mixed until shortly prior to application, when they react generally without additional activation. In order to accelerate the cross-linking reaction, however, it is also possible to use catalysts or to employ higher temperatures.

Examples of suitable cross-linkers are polyisocyanate cross-linkers, polycarbodiimides, amide- and amine-formaldehyde resins, phenolic resins, aldehyde resins and ketone resins, such as phenol formaldehyde resins, resoles, furane resins, urea resins, carbamic ester resins, triazine resins, melamine resins, benzoguanamine resins, cyanamide resins, aniline resins, as described in "Lackkunstharze", H. Wagner, H.F. Sarx, Carl Hanser Verlag München, 1971. Preferred cross-linkers are polyisocyanates.

Polyisocyanates can be used with free and/or blocked isocyanate groups. Suitable such cross-linker resins include blocked polyisocyanates based for example on isophorone diisocyanate, hexamethylene diisocyanate, 1,4-diisocyanatocyclo-hexane, bis(4-isocyanatocyclohexane)methane or 1,3-diisocyanatobenzene or based on paint polyisocyanates such as polyisocyanates which contain biuret or isocyanurate groups and are derived from 1,6-diisocyanatohexane, isophorone diisocyanate or bis(4-isocyanatocyclohexane)methane or paint polyisocyanates which contain urethane groups and are based on 2,4- and/or 2,6-diisocyanato-toluene or isophorone diisocyanate on the one hand and low molecular weight polyhydroxyl compounds such as trimethylolpropane, the isomeric propanediols or butanediols or any desired mixtures of such polyhydroxyl compounds on the other.

Suitable blocking agents for the stated polyisocyanates are, for example, monohydric alcohols such as methanol, ethanol, butanol, hexanol, cyclohexanol, benzyl alcohol, oximes such as acetoxime, methyl ethyl ketoxime, cyclohexanone oxime, lactams such as ε-caprolactam, phenols, amines such as diisopropylamine or dibutylamine, dimethylpyrazole or triazole, and also dimethyl malonate, diethyl malonate or dibutyl malonate.

Preference is given to the use of low-viscosity, hydrophobic or hydrophilicized polyisocyanates with free isocyanate groups based on aliphatic, cycloaliphatic, araliphatic and/or aromatic isocyanates, more preferably on aliphatic or cycloaliphatic isocyanates, since in this way it is possible to achieve a particularly high level of resistance in the coating film. The advantages of the binder dispersions of the invention are most clearly manifested in combination with these cross-linkers. These polyisocyanates generally have at 23 °C a viscosity of from 10 to 3500 mPas. If necessary the polyisocyanates can be employed as a blend of small amounts of inert solvents, in order to lower the viscosity to a level within the stated range. Triisocyanatononane as well can be used alone or in mixtures as a cross-linker component.

The resin and dispersion described herein are generally of sufficient hydrophilicity, so that the dispersibility of the cross-linker resins, where the substances in question are not water-soluble or water-dispersible in any case, is ensured. Water-soluble or gap dispersible polyisocyanates are obtainable, for example, by modification with carboxylate, sulfonate and/or polyethylene oxide groups and/or polyethylene oxide/polypropylene oxide groups.

Hydrophilicization of polyisocyanates, for example, is possible by reaction with substoichiometric amounts of monohydric hydrophilic polyether alcohols. The preparation of hydrophilicized polyisocyanates of this kind is described for example in EP 0 540 985 A1 (p. 3, line 55 - p. 4 line 5). Also highly suitable are the polyisocyanates containing allophanate groups described in EP 0 959 087 A1 (p. 3 lines 39 - 51), which can be prepared by reacting low-monomer-content polyisocyanates with polyethylene oxide polyether alcohols under allophanatization conditions. The water-dispersible polyisocyanate mixtures based on triisocyanatononane, as well, which are described in DE 100 078 21 A1 (p. 2 line 66 - p. 3 line 5) are suitable, as are polyisocyanates hydrophilicized with ionic groups (sulfonate groups, phosphonate groups), as described, for example, in DE 10 024 624 A1 (p. 3 lines 13 - 33). A further possibility is that of hydrophilicization through the addition of commercially customary emulsifiers.

In principle it is of course also possible to use mixtures of different cross-linker resins.

Customary coatings auxiliaries and additives can be added both to the aqueous coating system before, during or after its preparation and to the binder or cross-linker components present in the said system. Examples include defoamers, thickeners, pigments, dispersing auxiliaries, dulling agents, catalysts, anti-skinning agents, anti-settling agents or emulsifiers.

Another aspect of the invention is an article coated with a cross-linked polymer according to the invention.

The present invention will be further described with reference to the following figure and the example without wishing to be limited by it.

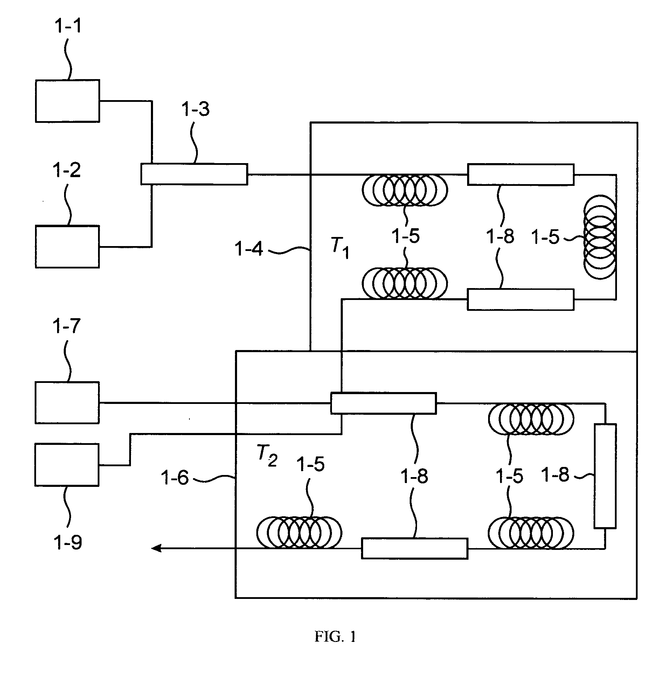

FIG. 1 shows an example of a reactor construction with which the method according to the invention can be carried out. From two reservoir vessels 1-1 and 1-2, containing for example a hydroxyalkyl (meth)acrylate, an acrylate and a methacrylate and a peroxide inhibitor, respectively, the reactants are first fed to a first mixing element (1-3) at ambient temperature by means of pumps (not shown here).

A first mixing element of this kind may be, for example, a p-structured cascade mixer from Ehrfeld Mikrotechnik BTS GmbH. Radically polymerizable, ethylenically unsaturated compounds and peroxide initiators are kept in separate reservoir vessels. The reservoir vessels 1-1, 1-2 may contain further compounds such as, for example, catalysts, solvents, reactive diluents and/or auxiliaries. After intense mixing of the components, the stream is introduced into a first delay (residence / dwell) section (reaction zone) 1-4. Here the stream is brought to a temperature T1 by heat exchanger 1-5. The reaction mixture passes through a delay section in which further mixing elements 1-8 are installed at certain intervals. These may be mixing structures of the kind described in EP 1 284 159. It is also possible here, alternatively, to use static mixing elements such as Kenics or SMX, for example. The temperature of the reaction mixture is regulated by the temperature T1 of the cooling medium of the reactor.

After the first delay section, the reaction medium is conveyed into a second delay section (reaction zone) 1-6 where the temperature is T2. The reaction mixture is admixed with further components from reservoir vessels 1-7 and 1-9, and there is intense commixing in a mixing element 1-8. The further component may comprise a hydroxyalkyl acrylate, an acrylate, a methacrylate and acrylic acid and a peroxide inhibitor, respectively. The further components may also comprise auxiliaries and/or solvents.

In the second reaction zone the reaction mixture passes through a defined delay (residence / dwell) section consisting of heat transfer elements 1-5 and mixing elements 1-8, before leaving the reaction zone. The temperatures T1 and T2 and the delay time are set so as to maximize the conversion of the reaction components.

### Example:

The following solutions were prepared:

| **Initiator solution 1** | **Weight-%** | **Grams** |
|---|---|---|
| Di-tert.-butylperoxycyclohexane | 27 | 102.54 |
| Butyl glycol | 35 | 129.23 |
| Naphtha | 38 | 142.94 |
| | | |

| **Monomer solution 1** | **Weight-%** | **Grams** |
|---|---|---|
| Methyl methacrylate | 45 | 505.8 |
| Hydroxyethyl methacrylate | 23 | 264.42 |
| Butyl acrylate | 32 | 359.79 |
| | | |

| **Initiator solution 2** | **Weight-%** | **Grams** |
|---|---|---|
| Tert.-butylperoxy(ethylhexyl) carbonate | 52 | 26.25 |
| Butyl glycol | 48 | 23.75 |
| | | |

| **Monomer solution 2** | **Weight-%** | **Grams** |
|---|---|---|
| Methyl methacrylate | 27 | 81.53 |
| Hydroxyethyl methacrylate | 39 | 115.52 |
| Butyl acrylate | 21 | 64.16 |
| Acrylic acid | 13 | 38.78 |

The reaction system comprised two Fluitec CSE-XR DN20 reactors which is described in EP-A 2113732. Monomer solution 1 (446.45 g/h) and initiator solution 1 (127.90 g/h) were mixed in a separate mixing stage and continuously fed into the first reactor. To the reaction mixture stream exiting the first reactor were added the monomer solution 2 (105.30 g/h) and the initiator solution 2 (9.50 g/h) and mixing was performed using mixing elements. The resulting reaction mixture stream was fed into the second reactor. The first and the second reactor were operated at a temperature of 143 °C.

The resulting copolymer had a weight averaged molecular weight M_{w} of 16286 g/mol and a number averaged molecular weight Mₙ of 4611 g/mol (determination by Size Excluding Chromatography at 23°C, using tetrahydrofurane as eluent and polystyrene as standard for calibration), corresponding to a polydispersity index of 3.5. The amounts of residual monomers were measured by means of headspace gas chromatography indicating that each monomer component was present in an amount <0.1 wt.%, thus demonstrating complete conversion.

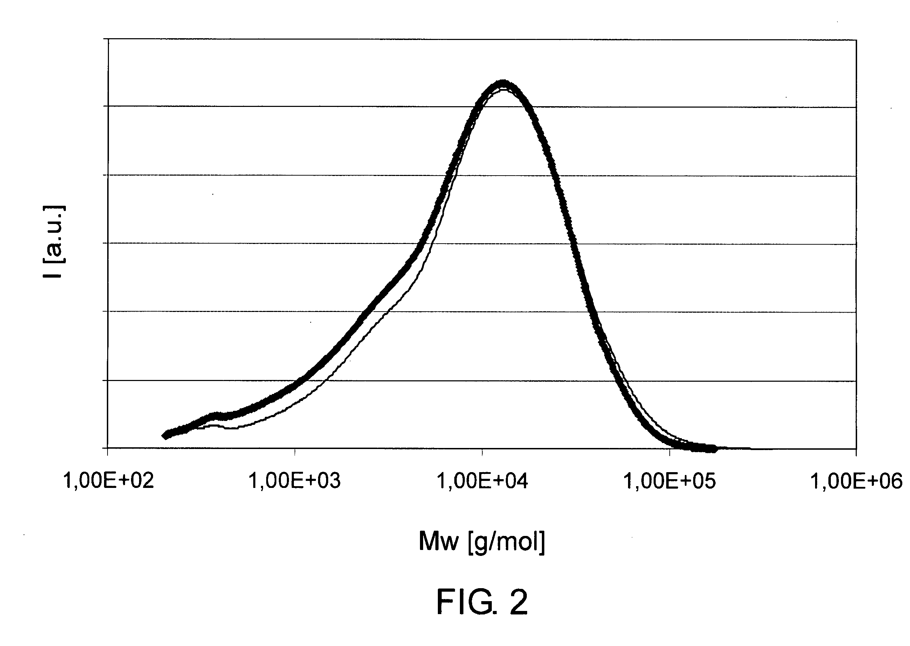

FIG. 2 shows a molecular weight distribution curve for the polymer obtained in the example (thin curve) and for a comparative example polymer where the reaction was carried out in a batch process (thick curve). The comparison of both molecular weight distributions clearly demonstrates that the method of continuous polymerization effectively leads to water-dispersible polymers comprising at least one hydroxyl group-containing (meth)acrylate polymer or at least one hydroxyl group-containing (meth)acrylate copolymer with a number averaged molecular weight Mₙ between 500 and 50000 g/mol, wherein the process can be conducted as a free radical polymerization at a temperature between 80 and 240 °C with a content of 0 to 30 weight-% of substances inert towards a free radical polymerization and which leads to polymers with less than 1 weight-% of residual monomers with respect to the solid resin.

## Claims

1. A method for the production of water-dispersible vinyl polymers, comprising the step of mixing at least a first and a second component and then passing the mixed components through a first delay section;
the first component comprising at least one radically polymerizable, hydroxyl group-containing monomer;
and the second component comprising at least one initiator;
**characterized in that**
the method is conducted as a continuous process;
the first delay section comprises at least one mixing element selected from the group consisting of static mixing elements and dynamic mixing elements and
the first delay section has a heat transfer rate of ≥ 10 kW/(K m³) to ≤ 750 kW/(K m³).

2. The method according to claim 1, wherein the first component further comprises at least one monomer selected from the group consisting of aromatic vinyl monomers and aliphatic esters of acrylic and/or methacrylic acid with 1 to 18 C-atoms.

3. The method according to claim 1, carried out under a pressure of ≥ 0 to ≤ 30 bar and at a temperature of ≥ 20 °C to ≤ 200 °C.

4. The method according to claim 1, having a delay time in the first delay section of ≥ 20 seconds to ≤ 120 minutes.

5. The method according to claim 1, further including the step of adding at least a third and a fourth component after the first delay section, the third component comprising at least one radically polymerizable monomer and the fourth component comprising at least one initiator and wherein the resulting mixture is passed through a second delay section.

6. The method according to claim 5, wherein the third component comprises at least one monomer selected from the group consisting of aromatic vinyl monomers, aliphatic esters of acrylic and/or methacrylic acid with 1 to 18 C-atoms, hydroxyl group-containing monomers, and (meth)acrylic acid.

7. The method according to claim 5, wherein the first delay section and the second delay section have different temperatures.

8. A water-dispersible vinyl polymer, obtainable by a method according to one or more of claims 1 to 7.

9. Use of the polymers according to claim 8 for the manufacturing of coatings, adhesives or sealants.

10. An article coated with a cross-linked polymer according to claim 8.

## Patentansprüche

1. Verfahren zur Herstellung von wasserdispergierbaren Vinylpolymeren, bei dem man mindestens eine erste und eine zweite Komponente mischt und dann die gemischten Komponenten durch eine erste Verweilstrecke führt;
wobei die erste Komponenten mindestens ein radikalisch polymerisierbares, hydroxylgruppenhaltiges Monomer umfasst
und die zweite Komponente mindestens einen Initiator umfasst;
**dadurch gekennzeichnet, dass**
das Verfahren kontinuierlich gefahren wird;
die erste Verweilstrecke mindestens ein Mischelement aus der Gruppe bestehend aus statischen Mischelementen und dynamischen Mischelementen umfasst und
die erste Verweilstrecke eine Wärmeübertragungsrate von ≥ 10 kW/(K·m³) bis ≤ 750 kW/(K·m³) aufweist.

2. Verfahren nach Anspruch 1, bei dem die erste Komponente ferner mindestens ein Monomer aus der Gruppe bestehend aus aromatischen Vinylmonomeren und aliphatischen Estern der Acryl- und/oder Methacrylsäure mit 1 bis 18 C-Atomen umfasst.

3. Verfahren nach Anspruch 1, das unter einem Druck von ≥ 0 bis ≤ 30 bar und bei einer Temperatur von ≥ 20°C bis ≤ 200°C durchgeführt wird.

4. Verfahren nach Anspruch 1 mit einer Verweilzeit in der ersten Verweilstrecke von ≥ 20 Sekunden bis ≤ 120 Minuten.

5. Verfahren nach Anspruch 1, bei dem man ferner nach der ersten Verweilstrecke mindestens eine dritte und eine vierte Komponente zugibt, wobei die dritte Komponente mindestens ein radikalisch polymerisierbares Monomer umfasst und die vierte Komponente mindestens einen Initiator umfasst und wobei die resultierende Mischung durch eine zweite Verweilstrecke geführt wird.

6. Verfahren nach Anspruch 5, bei dem die dritte Komponente mindestens ein Monomer aus der Gruppe bestehend aus aromatischen Vinylmonomeren, aliphatischen Estern der Acryl- und/oder Methacrylsäure mit 1 bis 18 C-Atomen, hydroxylgruppenhaltigen Monomeren und (Meth)acrylsäure umfasst.

7. Verfahren nach Anspruch 5, bei dem die erste Verweilstrecke und die zweite Verweilstrecke unterschiedliche Temperaturen aufweisen.

8. Wasserdispergierbares Vinylpolymer, das nach einem Verfahren gemäß einem oder mehreren der Ansprüche 1 bis 7 erhältlich ist.

9. Verwendung der Polymere nach Anspruch 8 zur Herstellung von Beschichtungen, Klebstoffen oder Dichtstoffen.

10. Gegenstand, der mit einem vernetzten Polymer nach Anspruch 8 beschichtet ist.

## Revendications

1. Procédé pour la production de polymères de vinyle dispersibles dans l'eau, comprenant l'étape consistant à mélanger un premier et un deuxième constituant puis à faire passer les constituants mélangés au travers d'une première section de délai ;
le premier constituant comprenant au moins un monomère contenant des groupes hydroxyle, polymérisable par voie radicalaire ;
et le deuxième constituant comprenant au moins un initiateur ; **caractérisé en ce que** le procédé est réalisé en tant que procédé continu ;
la première section de délai comprend au moins un élément de mélange choisi dans le groupe constitué par les éléments de mélange statique et les éléments de mélange dynamique et
la première section de délai présente un taux de transfert thermique ≥ 10 kW/(K m³) à ≤ 750 kW/(K m³).

2. Procédé selon la revendication 1, le premier constituant comprenant en outre au moins un monomère choisi dans le groupe constitué par les monomères aromatiques de vinyle et les esters aliphatiques de l'acide acrylique et/ou méthacrylique comprenant 1 à 18 atomes de carbone.

3. Procédé selon la revendication 1, réalisé sous une pression de ≥ 0 à ≤ 30 bars et à une température de ≥ 20°C à ≤ 200°C.

4. Procédé selon la revendication 1, présentant un temps de délai dans la première section de délai de ≥ 20 secondes à ≤ 120 minutes.

5. Procédé selon la revendication 1, comprenant en outre l'étape consistant à ajouter au moins un troisième et un quatrième constituant après la première section de délai, le troisième constituant comprenant au moins un monomère polymérisable par voie radicalaire et le quatrième constituant comprenant au moins un initiateur et le mélange résultant étant passé au travers d'une deuxième section de délai.

6. Procédé selon la revendication 5, le troisième constituant comprenant en outre au moins un monomère choisi dans le groupe constitué par les monomères aromatiques de vinyle, les esters aliphatiques de l'acide acrylique et/ou méthacrylique comprenant 1 à 18 atomes de carbone, les monomères contenant des groupes hydroxyle et l'acide (méth)acrylique.

7. Procédé selon la revendication 5, la première section de délai et la deuxième section de délai présentant des températures différentes.

8. Polymère de vinyle dispersible dans l'eau, pouvant être obtenu par un procédé selon l'une ou plusieurs des revendications 1 à 7.

9. Utilisation des polymères selon la revendication 8 pour la production de revêtements, d'adhésifs ou de matériaux d'étanchéité.

10. Objet revêtu par un polymère réticulé selon la revendication 8.
